# EUROPÄISCHE PATENTSCHRIFT

(11) **EP 0 972 891 B1**
(45) Veröffentlichungstag und Bekanntmachung des Hinweises auf die Patenterteilung: **14.05.2003**
(21) Anmeldenummer: 99113308.3
(22) Anmeldetag: 09.07.1999
(51) Int. Cl.: E04F 13/08, F16B 37/04

(54) **Vorrichtung für die Befestigung von Glasscheiben an Gebäudefassaden**
Fixing device for fixing sheets of glass to building façades
Dispositif pour la fixation de panneaux de verre contre des façades de bâtiments

(30) Priorität: 14.07.1998 DE 19831453
(43) Veröffentlichungstag der Anmeldung: 19.01.2000
(73) Patentinhaber: SAINT-GOBAIN GLASS FRANCE, 92400 Courbevoie (FR)
(72) Erfinder: Dirisamer, Wolfgang, 4040 Linz (AT); Leopoldseder, Roland, 4300 St. Valentin (AT); Eckelt, Christian, 4400 Steyr (AT)
(74) Vertreter: Dederichs, August

(56) Entgegenhaltungen:
- EP-A- 0 485 670
- EP-A- 0 784 129
- DE-A- 3 927 653
- DE-C- 19 507 715
- US-A- 4 948 313

## Beschreibung

Die Erfindung betrifft eine Vorrichtung für die Klemmbefestigung von Verkleidungsplatten, insbesondere von Glasplatten, an Gebäudefassaden mit Hilfe von Bohrungen in den Platten durchdringenden Schrauben an einer horizontale Profilschienen mit hinterschnittener Nut aufweisenden Tragkonstruktion, wobei zur Befestigung von außen in den Nutspalt einführbare und durch Verdrehen gegen die Rückseiten der Widerlager der hinterschnittenen Nut der Profilschienen festlegbare, mit einem Muttergewinde versehene Klemmittel vorgesehen sind.

Klemmbefestigungen dieser Art sind in verschiedenen Ausführungen bekannt, z.B. aus DE 195 07715. Sie erlauben einerseits die Befestigung der Platten von der Außenseite. Das ist immer dann notwendig, wenn die Tragkonstruktion unmittelbar auf dem Mauerwerk des Gebäudes befestigt ist. Um die unvermeidbaren Toleranzen auszugleichen, lassen sich die Klemmittel einerseits in der horizontalen Richtung in der Nut der Profilschienen verschieben. Zum Ausgleich der Toleranzen in der vertikalen Richtung sind die Klemmittel mit einem in der Einbaustellung vertikalen Langloch versehen, so daß sich der Schaft der Befestigungsschrauben in diesem Langloch verschieben läßt. Nachdem auf diese Weise die Position der Schrauben festgelegt ist, werden die Schrauben von der Außenseite angezogen, wodurch die Klemmittel auf den Stegen der horizontalen Profilschienen durch die Wirkung der Klemmkraft festgelegt werden.

Es läßt sich nicht ausschließen, daß die Klemmkraft der Klemmbefestigung im Laufe der Zeit nachläßt. Wenn es sich um Platten mit einem hohen Gewicht, wie zum Beispiel Glasplatten, handelt, besteht die Gefahr, daß bei nachlassender Klemmkraft die Glasplatten unter der Wirkung ihres Eigengewichts ihre Position verändern. Wenn die Glasplatten sich lockern und sich verschieben, ist nicht nur das optische Bild der Fassade gestört, sondern es kann unter Umständen auch zu Berührungen der Kanten der Glasplatten und infolgedessen zu Verletzungen der Glasplatten kommen.

Der Erfindung liegt die Aufgabe zugrunde, eine Befestigungsvorrichtung der eingangs genannten Art zu entwickeln, bei der die Gefahr einer Lockerung und Verschiebung der Klemmittel weitgehend ausgeschaltet wird.

Diese Aufgabe wird erfindungsgemäß dadurch gelöst, daß die Klemmittel ein Zwischenstück und ein mit dem Muttergewinde versehenes Spannstück umfassen, daß das Zwischenstück mit einem im Einbauzustand senkrecht verlaufenden Langloch und auf seiner Rückseite mit einer aus seitlichen Anschlagflächen gebildeten Führung für das Spannstück versehen ist, daß das mit dem Muttergewinde versehene Spannstück auf der an dem Steg des Zwischenstücks anliegenden Seite mit vorspringenden Nasen versehen ist, und daß das Zwischenstück aus einem verglichen mit dem Material des Spannstücks weicheren Material besteht, so daß die Nasen des Spannstücks in das Zwischenstück eindringen und einen Formschluß zwischen dem Spannstück und dem Zwischenstück herstellen.

Durch die erfindungsgemäßen Maßnahmen erhält man nach dem Anziehen der Befestigungsschraube einen gegen eine senkrechte Verschiebung nach unten gesicherte Verbindung im Bereich der Befestigungsvorrichtung, indem einerseits die untere Begrenzungsfläche des Zwischenstücks sich auf dem unteren Steg der horizontalen Profilschiene abstützt, und andererseits zwischen dem mit dem Gewinde versehenen Spannstück und dem Zwischenstück durch das Eindringen der Nasen in das Material des Zwischenstücks der Formschluß hergestellt wird. Eine Lageveränderung der Glasplatten unter der Wirkung des Eigengewichts wird auf diese Weise sicher vermieden.

Wenn eine Platte mit Hilfe von beispielsweise vier Schrauben auf der Tragkonstruktion befestigt werden soll, ist es nicht erforderlich, daß alle vier Befestigungsvorrichtungen die erfindungsgemäßen Merkmale aufweisen. Es kann in solchen Fällen genügen, beispielsweise nur die beiden oberen Befestigungsvorrichtungen erfindungsgemäß auszubilden, während die beiden unteren Befestigungsvorrichtungen ohne den erfindungsgemäßen Formschluß ausgebildet sein können.

Eine bevorzugte Ausführung des Zwischenstücks der Klemmittel besteht aus einem glasfaserverstärkten Kunststoff, z. B. PA6, einer Polyamidbasis. Man kann aber auch geeignete, verhältnismäßig weiche Metallegierungen verwenden. Das mit einem Muttergewinde versehene Spannstück besteht in aller Regel aus Stahl.

Zwischen der Profilschiene und der (Glas-)Platte wird eine relativ harte elastische Zwischenlage eingebaut, welche den direkten Kontakt zwischen dem Glas und der Profilschiene verhindert. In der Regel sind diese Zwischenlagen in Einzelstücken jeweils im Bereich der Aufspannpunkte vorgesehen. Bei Relativbewegungen zwischen Glasscheibe und Unterkonstruktion zum Ausgleich von Spannungen gleiten sie auf der Auflagefläche der Profilschiene.

Mit den genannten Komponenten ist eine Klemmbefestigung geschaffen, die an jedem einzelnen Loch der Glasscheibe vormontiert und dann auf der Baustelle mit geringstmöglichem Zeitaufwand an die gebäudefeste Unterkonstruktion angefügt werden kann.

Es sei noch angemerkt, daß mit der hier erörterten Befestigung für flächige Gegenstände zwar vornehmlich vertikale Aufhängungen ausgeführt werden sollen, daß sie sich aber auch für horizontale Aufhängungen z. B. an Gebäudedecken einsetzen läßt. Mit den in der Nut liegenden Klemmitteln lassen sich auch hohe Normalkräfte in Richtung der Befestigungsmittel sicher in die Unterkonstruktion abtragen.

Weitere Einzelheiten und Vorteile des Gegenstands der Erfindung gehen im Rahmen der nachstehenden Patentansprüche, ohne Absicht einer Beschränkung aus der Zeichnung eines Ausführungsbeispiels und deren sich im folgenden anschließender eingehender Beschreibung hervor.

Es zeigen
- Fig. 1: eine Klemmbefestigung nach dem Stand der Technik in einem senkrechten Schnitt;
- Fig. 2 und 3: perspektivische Explosionsdarstellungen einer erfindungsgemäßen Klemmbefestigung aus gegenläufigen Blickrichtungen;
- Fig. 4 bis 6: drei Schnittansichten der Klemmbefestigung gemäß Fig. 2 / 3 in unterschiedlichen Stellungen.

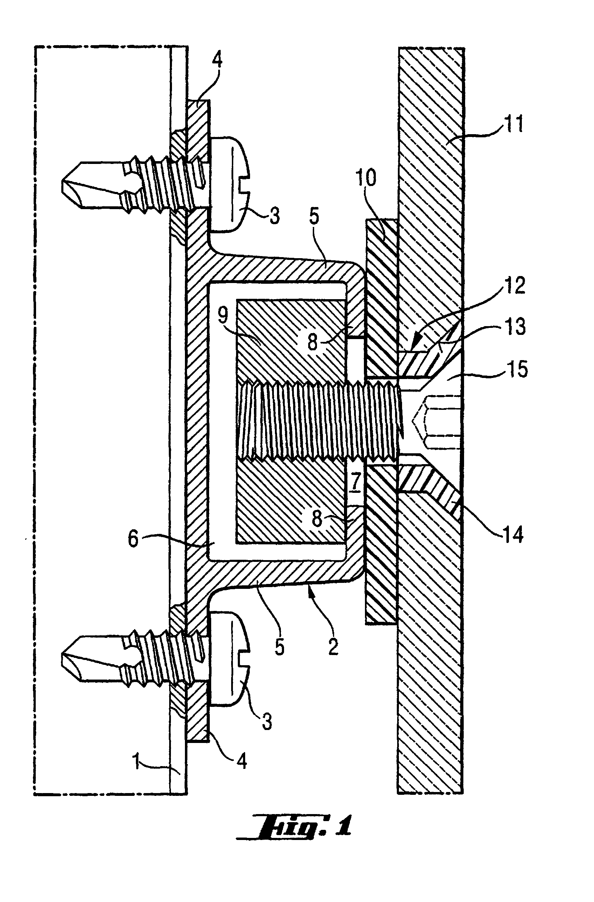

Gemäß **Fig. 1**ist mit einem senkrechten, schienenartigen Tragprofil 1 eine horizontale Profilschiene 2 fest verbunden. Das Tragprofil kann in nicht dargestellter Weise auf einer Gebäudewand (z. B. aus Beton, Mauerwerk) mittels daran angeschraubter Haltebeschläge mit einigem Abstand zur Wandoberfläche befestigt sein, wobei in den Abstandsraum Dämmaterial eingelegt werden kann. Zum Festlegen der Profilschiene 2 werden vorzugsweise Selbstbohrschrauben 3 verwendet. Sie durchdringen einen doppelseitigen Befestigungsflansch - oder zumindest entsprechende Lappen- 4 der Profilschiene 2 und sind in das Tragprofil eingeschraubt. In der gezeigten Ansicht erstreckt sich die Profilschiene 2 quer zum vertikalen Tragprofil 1.

Die horizontal ausgerichtete Profilschiene 2 (Halfenschiene) ist in an sich bekannter Weise als Strangpreßprofil mit einer Nutform gefertigt, die auch beschreibend als C-Profil bezeichnet wird. Damit ist ein Querschnitt gemeint, der eine durch vom Befestigungsflansch 4 abragende Stege bzw. Winkelschenkel 5 umschriebene, einseitig offene und hinterschnittene Nut 6 bildet. Der Verlauf der einander zugewandten freien Enden der Winkelschenkel 5 definiert einen Nutspalt 7 von in der Regel konstanter lichter Weite.

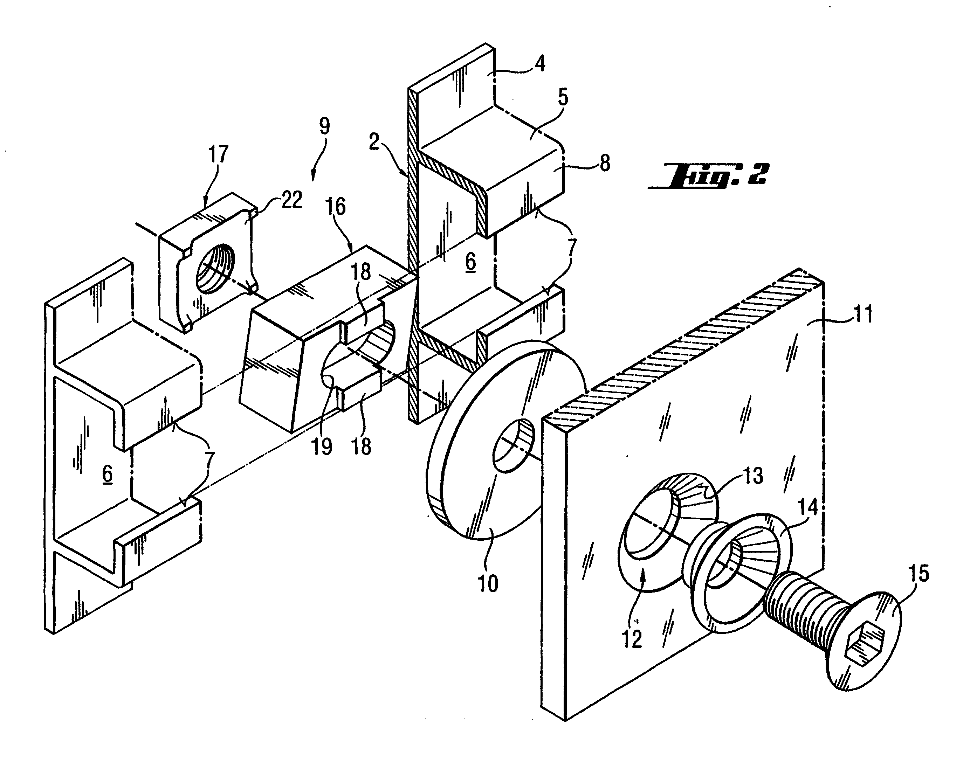

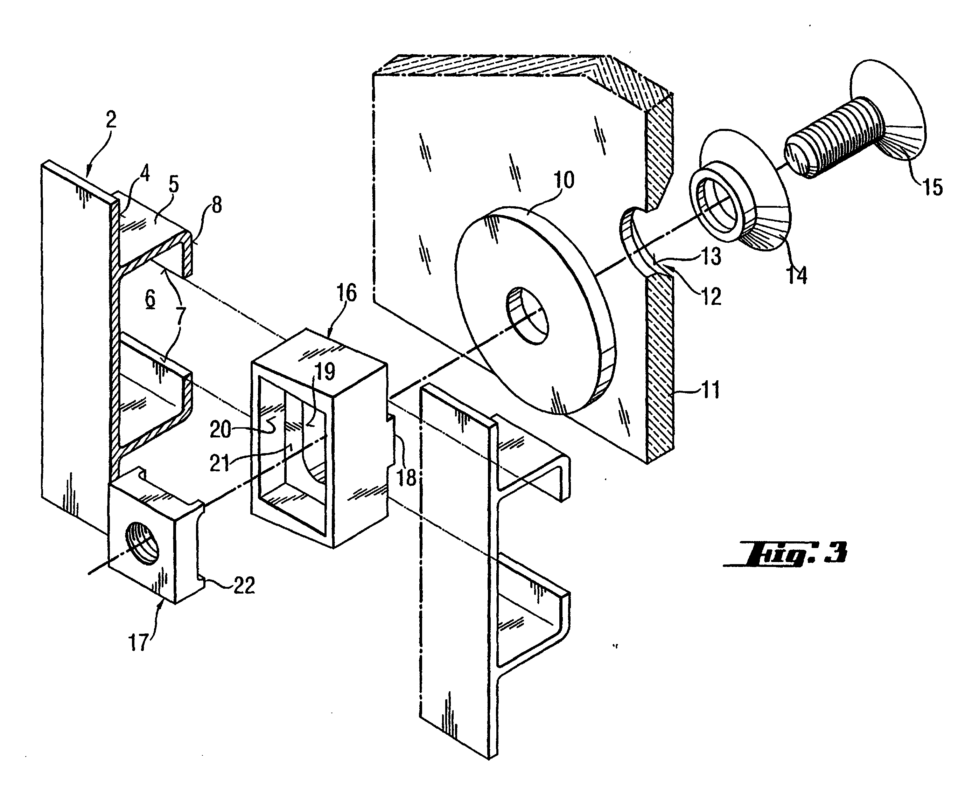

Die bisher beschriebenen Bauelemente sind zusammenfassend als die Unterkonstruktion für die Klemmbefestigung anzusehen. Im folgenden wird repräsentativ für eine Mehrzahl ein einzelner Befestigungs- bzw. Aufspannpunkt für eine Glasscheibe auf diese Unterkonstruktion beschrieben. Die Innenseiten der zueinander hin orientierten freien Enden der Winkelschenkel 5 der Profilschiene 2 bilden Widerlager 8 für ein in die Nut 6 eingesetztes Klemmittel 9. Dieses ist hier nur schematisch als an sich bekannter einstückiger Nutstein mit einem eingeformten Muttergewinde dargestellt und nur kraftschlüssig aufgespannt. Bei der erfindungsgemäßen Befestigung wird indessen eine Sonderbauform des Klemmittels verwendet, auf die später anhand Fig. 2 und 3 noch näher eingegangen wird.

Auf die Außenflächen der zueinander hin orientierten freien Enden der Winkelschenkel 5 ist über eine harte Zwischenlage 10 aus Kunststoff (z. B. Polyamid) eine Glasscheibe 11 aufgelegt. Beide überdecken den Nutspalt 7. In die Glasscheibe 11 sind Bohrungen 12 mit konischem Einlauf 13 eingelassen, von denen hier nur eine gezeigt ist. Darin sind ein besonderer, flächenbündig eingesetzter konischer Zwischenring 14 sowie ein Befestigungsmittel 15 eingesetzt. Als solches ist hier eine Senkkopfschraube verwendet, deren Kopf flächenbündig mit der Außenfläche der Glasscheibe 11 abschließt. Ihr Schaft ragt durch die Bohrung 12, die Zwischenlage 10 und den Nutspalt 7 in die Nut 6 hinein, das Gewinde ist in das Klemmittel 9 eingeschraubt. Das kann bei einer evtl. Vormontage schon vor dem Einführen der Klemmittel 9 in die Nut 6 geschehen, wobei die Schraube vorläufig nur teilweise eingedreht werden darf. In der Gewindepaarung wird vorzugsweise eine gewisse Hemmung vorgesehen, damit das Klemmittel beim Drehen der Schraube sicher mitgenommen wird.

Durch Verspannen der Senkkopfschraube mit dem Klemmittel 9 ist die Glasscheibe 11 über die Zwischenlage 10 auf die Profilschiene 2 fest aufgespannt, wobei eine kraftschlüssige Verbindung vorliegt. Bevorzugt wird man ein Anzugdrehmoment für die Senkkopfschrauben vorgeben, um eine Beschädigung der Zwischenlage 10, der Glasscheibe 11 und/oder des Zwischenrings 14 zu vermeiden.

Die Zwischenlage 10 ist grundsätzlich nur punktuell um die Aufspannstellen herum angeordnet. Beim Befestigen von großen Glasscheiben kann es aber zweckmäßig sein, zusätzliche Zwischenlagen mit gleicher Dicke zwischen weit auseinanderliegenden Aufspannstellen einzubauen (z. B. in die Profilschiene eingeknöpft). So verhindert man Kontakte zwischen Glas und Metall auch bei größeren Durchbiegungen der Scheiben infolge von Windkräften.

In dieser Einbausituation wirkt auf die Klemmbefestigung und auf die horizontal verlaufende Profilschiene das Gewicht der vertikal aufgehängten Glasscheibe 11 ein. Wie bereits eingangs erwähnt, sind bei einer rechteckigen Glasscheibe in der Regel vier Befestigungspunkte mit den notwendigen Freiheitsgraden vorzusehen.

In **Fig. 2 und 3** erkennt man in zwei gegenläufig orientierten Explosions-Ansichten eine erfindungsgemäße Ausführung des Klemmittels 9, deren Funktion nachstehend näher beschrieben wird. In Fig. 2 erkennt man, von der Sichtseite der Glasscheibe 11 gesehen und auf der Längsachse des Befestigungsmittels 15 aufgereiht, den Zwischenring 14, die Glasscheibe 11 mit der Bohrung 12 und die Zwischenlage 10 aus Fig. 1 wieder. Strichpunktiert sind zur Verdeutlichung ferner die Kanten des Nutspalts 7 nebst Abschnitten der Profilschiene 2 angedeutet. Das Klemmittel 9 ist hier zweiteilig aus einem länglichen, im Umriß rechteckigen oder rautenförmigen Zwischenstück 16 und einem Spannstück 17 mit einem Muttergewinde ausgeführt. Die Breitenabmessung des Zwischenstücks 16 entspricht maximal der lichten Weite des Nutspalts 7, während seine langen Seiten annähernd das Maß der Breite der Nut 6 - quer zu deren Längserstreckung gemessenerreichen.

Es versteht sich von selbst, daß die Außenabmessungen des Zwischenstücks 16 mit dem darinliegenden Spannstück 17 auf die Breite und Tiefe der Nut 6 und die lichte Weite des Nutspalts 7 so abzustimmen sind, daß man beide Teile zusammen in die Nut 6 einführen - dabei sind die langen Seiten des Zwischenstücks 16 parallel zu den Kanten des Nutspalts 7 ausgerichtet- und dann so weit verdrehen kann, daß das Zwischenstück 16 den Nutspalt 7 mit hinreichender beidseitiger Überdeckung der Widerlager überbrückt. Beim bevorzugten Parallelogramm-Umriß des Zwischenstücks 16 ist dessen kürzere Diagonale zum freien Eindrehen des Zwischenstücks höchstens gleich groß wie oder eher kürzer als die Nutbreite. Die längere Diagonale ist indessen länger als die Nutbreite, so daß sich ihre Enden oder Spitzen in Einbaustellung an die seitlichen Innenwände der Nut 6 anlegen und das Zwischenstück nicht weiterdrehbar ist. Der Schnittpunkt beider Diagonalen liegt dann mittig zum Nutspalt.

Das Zwischenstück trägt ferner auf seiner zur Glasscheibe 11 bzw. zu den Widerlagern 8 hin gewandten Seite Vorsprünge 18, welche im Einbauzustand im Nutspalt 7 zu liegen kommen. Die Vorsprünge 18 können seitlich abgerundet werden, um das Ein- und Ausdrehen des Zwischenstücks 16 in der Nut 6 nicht unnötig zu behindern. Zwischen den Vorsprüngen 18 ist zum Durchstecken des Befestigungsmittels 15 ein Langloch 19 im Zwischenstück 16 vorgesehen, dessen Länge ebenfalls mindestens der lichten Weite des Nutspalts 7 entspricht.

In **Fig. 3** sieht man diese Teile von ihrer Rückseite her. Man erkennt, daß in die von der Glasscheibe 11 abgewandte Seite des Zwischenstücks 16 eine längliche Führung 20 zur Aufnahme des Spannstücks 17 eingeformt ist. Diese Führung ist hier in Gestalt einer Rinne oder Wanne ausgeführt, deren Wände Anschläge für das Spannstück bilden und deren ebener Boden von dem Langloch 19 durchbrochen ist. Letzteres ist innerhalb der Führung beidseits von Stegen 21 flankiert, auf welchen das Spannstück 17 beim Verspannen mit dem Befestigungsmittel 15 aufsitzt. An die Ecken der den Stegen 21 zugewandten Seite des Spannstücks 17 sind als Formschlußelemente Nasen 22 angeformt. Strichpunktiert ist hier wieder die Orientierung des Nutspalts 7 angedeutet. Man erkennt, daß die Führung 20 winklig, vorzugsweise senkrecht zu dessen Verlauf orientiert ist. Sie ist deutlich länger als die entsprechende Abmessung des Spannstücks 17, während ihre Breite annähernd der Breite des Spannstücks entspricht. Einmal in die Führung 20 eingesetzt, läßt sich das Spannstück 17 längs der Führung bei geringem seitlichem Spiel hin und her verschieben, jedoch nicht verdrehen.

Hieraus ergibt sich folgende vorteilhafte Wirkung : Man kann das in die Führung 20 des Zwischenstücks 16 eingelegte Spannstück 17 noch so lange längs der Führung verschieben, wie das Befestigungsmittel 15 nur vorläufig eingedreht wurde, wobei die Nasen 22 noch auf den Stegen 21 gleiten. Der Schaft des Befestigungsmittels 15 kann derweil entlang dem Langloch 19 gleiten. Selbst wenn das Zwischenstück 16 bereits mit im Nutspalt 7 liegenden Vorsprüngen 18 in der Nut 6 bzw. in der Profilschiene horizontal positioniert sein sollte, so kann man mit dem Verschieben des Spannstücks 17 bedarfsgerecht noch begrenzte Maßabweichungen in vertikaler Richtung ausgleichen, ohne die beidseitige Überdeckung des Zwischenstücks 16 mit den Widerlagern zu beeinträchtigen.

In einer ausgeführten Bauform des Zwischenstücks 16 ist dieses 20 mm breit und 14 mm dick zuzüglich 2,6 mm Erhebung der Vorsprünge 18. Seine Länge über die beiden Spitzen der langen Diagonalen gemessen beträgt 34 mm, während seine langen Seiten 30,5 mm lang sind. Die Führung 20 ist um 6 mm eingesenkt, 24 mm lang und 18 mm breit. Das Langloch 19 ist ebenfalls 20 mm lang und 11 mm breit, so daß als Befestigungsmittel 15 Schrauben mit metrischem 10-mm-Gewinde durchgesteckt werden können. Die Vorsprünge 18 sind etwa 10 mm lang. Es sei angemerkt, daß an sich schon aufgrund der Parallelogrammform des Zwischenstücks 16 mit diesem unterschiedliche Stellungen in der Nut quer zu deren Längserstreckung eingestellt werden könnten. Jedoch wurde festgestellt, daß das Zwischenstück sich in der Regel spätestens beim Festziehen der Schrauben selbsttätig in der gezeigten Weise in der Nut zentriert, so daß es sich unten und oben gegen die Schenkel 5 der Profilschiene 2 abstützt. Das Zwischenstück kann in einfacher Weise einstückig aus einem geeigneten Werkstoff, beispielsweise aus Aluminium oder aus einem ggf. faserverstärkten Kunststoffmaterial ausgeformt werden.

Der Zwischenring 14 hat als Besonderheit, daß der Kegelwinkel seiner äußeren Mantelfläche, die auf dem Glas bzw. der darin vorgesehenen Senkbohrung liegt, größer ist als der Kegelwinkel seiner der inneren Mantelfläche, auf welchen der Kopf der Senkschraube aufgespannt wird. Als konkrete Ausführung wurden Winkel von 100° außen und 90° innen gewählt. Damit wird insbesondere bei Verwendung von relativ dünnen Glasplatten die statische Lastabtragung im Lochleibungsbereich verbessert.

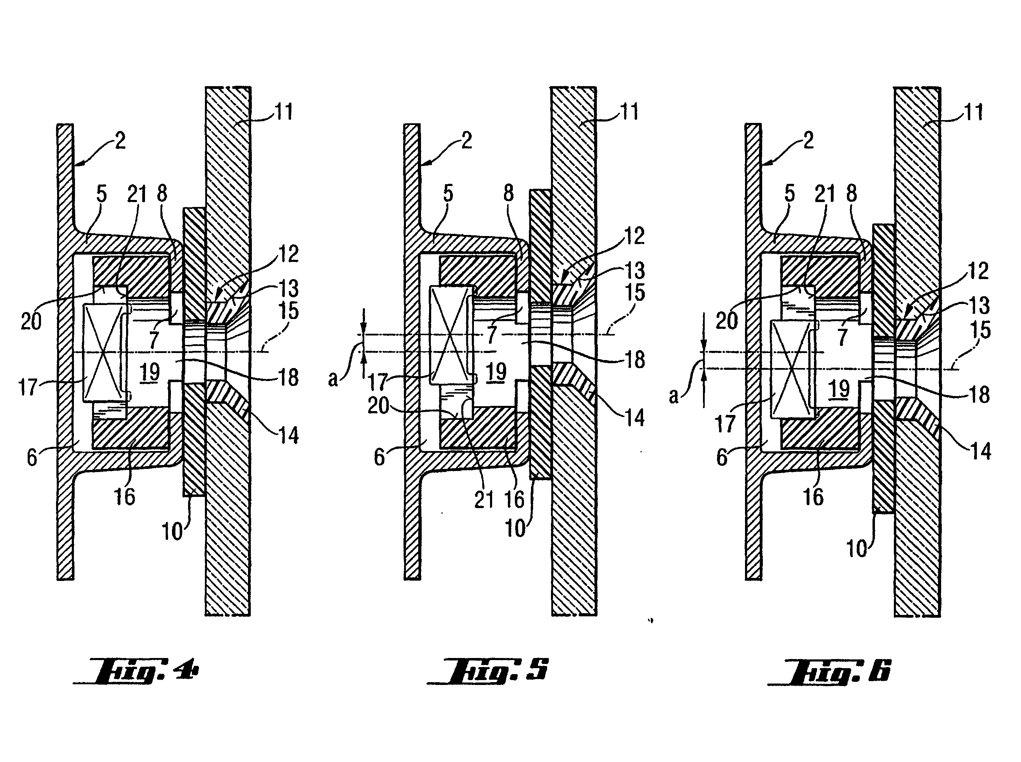

Die **Fig. 4 bis 6** zeigen Schnittansichten dreier verschiedener Relativstellungen der vorstehend erörterten Bauelemente und verdeutlichen damit die Option zum Ausgleich von Toleranzen quer zur Nutlängsrichtung. Das Befestigungsmittel 15 ist hier vereinfachend nur durch seine Mittellinie repräsentiert. Man erkennt hier deutlich, daß die Vorsprünge 18 im Nutspalt 7 liegen, und daß das Zwischenstück 16 in vertikaler Richtung, das heißt quer zur Längsrichtung der horizontal in Blickrichtung verlaufenden Nut 6 nicht mehr verschiebbar ist, weil seine obere und untere Begrenzungsfläche an den Schenkeln 5 der Profilschiene 2 anliegen. Da auch die Nasen 22 des Spannstücks 17 im Klemmzustand in das im Vergleich zum Material des Spannstücks 17 weichere Material des Zwischenstücks 16 eingedrungen sind, ergibt sich auf diese Weise eine formschlüssige Verbindung in vertikaler Richtung zwischen der Glasscheibe und der Profilschiene 2.

Bevor die Schraube 15 angezogen wird, hat das Spannstück 17 in der Führung 20 noch einen translatorischen Freiheitsgrad in vertikaler Richtung, so daß man bei Bedarf eine aus der Nutmitte abweichende Position des Befestigungsmittels einstellen kann. Ganz links in Fig. 4 sind die Mittelstellungen des Spannstücks 17 in seiner Führung 20 und der Bohrung 12 in der Glasscheibe 11 gezeigt, während die Fig. 5 und 6 die jeweils gegenüberliegenden, maximal aus der Nutmitte abweichenden Stellungen verdeutlichen. Die durch Linien und Pfeile angedeuteten möglichen Abweichungen a betragen etwa 3,5 mm beidseits der Mittellage.

Schließlich wird man das Befestigungsmittel 15 mit der vorgeschriebenen Kraft verspannen. Dabei können sich die Nasen 22 in die Stege 21 einpressen, abhängig von der jeweiligen Materialhärte, und stellen damit den Formschluß zwischen dem Spannstück und dem Zwischenstück her. Selbst wenn dann keine Bewegung mehr quer zur Nutrichtung möglich ist - die Gewichtskraft der Glasscheibe 11 wird in die Profilschiene 2 und in die Unterkonstruktion zusätzlich über den Formschluß abgetragen -, so genügt diese Anordnung von Freiheitsgraden, weil Dehnungsunterschiede in der Regel nur in Längsrichtung der Profilschiene und nicht quer dazu auftreten werden.

## Patentansprüche

1. Vorrichtung für die Klemmbefestigung von Verkleidungsplatten, insbesondere von Glasscheiben, an Gebäudefassaden mit Hilfe von Bohrungen (12) in den Glasscheiben (11) durchdringenden Schrauben (15) an einer horizontale Profilschienen (2) mit hinterschnittener Nut (6) aufweisenden Tragkonstruktionen, wobei zur Klemmbefestigung von außen in den Nutspalt (6) einführbare und durch Verdrehen gegen die Rückseiten der Widerlager (8) der hinterschnittenen Nut (6) der Profilschienen (2) festlegbare, mit einem Muttergewinde versehene Klemmittel (9) vorgesehen sind, **gekennzeichnet durch** folgende Merkmale:
a) die Klemmittel (9) umfassen ein Zwischenstück (16) und ein mit dem Muttergewinde versehenes Spannstück (17),
b) das Zwischenstück (16) ist mit einem im Einbauzustand vertikal oder annähernd vertikal verlaufenden Langloch (19) und auf seiner Rückseite mit einer aus seitlichen Anschlagflächen gebildeten Führung (20) für das Spannstück (17) versehen,
c) das mit dem Muttergewinde versehene Spannstück (17) ist auf der an dem Steg (21) des Zwischenstücks (16) anliegenden Seite mit vorspringenden Nasen (22) versehen, und
d) das Zwischenstück (16) besteht aus einem verglichen mit dem Material des Spannstücks (17) weicheren Material, so daß die Nasen (22) des Spannstücks (17) in das Zwischenstück (16) eindringen und einen Formschluß zwischen dem Spannstück (17) und dem Zwischenstück (16) herstellen.

2. Vorrichtung zur Klemmbefestigung nach Anspruch 1, **dadurch gekennzeichnet, daß** das Zwischenstück (16) aus einem verhältnismäßig weichen Metall wie Aluminium oder aus nichtmetallischem Werkstoff, insbesondere aus einem glasfaserverstärkten Kunststoff, besteht.

3. Vorrichtung zur Klemmbefestigung nach Anspruch 2, **dadurch gekennzeichnet, daß** das Zwischenstück (16) aus einem Polymer auf Polyamidbasis besteht.

4. Vorrichtung zur Klemmbefestigung nach einem der Ansprüche 1 bis 3, **dadurch gekennzeichnet, daß** das Zwischenstück (16) im Längsschnitt eine parallelogrammförmige Gestalt hat, wobei die längere Diagonale des Prallelogramms länger ist als die Breite der Nut (6) der Profilschiene (2).

5. Vorrichtung zur Klemmbefestigung nach einem der Ansprüche 1 bis 4, **dadurch gekennzeichnet, daß** das Zwischenstück (16) auf seiner Vorderseite mit im Einbauzustand in den Nutspalt (7) eingreifenden Vorsprüngen (18) versehen ist.

6. Vorrichtung zur Klemmbefestigung nach einem der Ansprüche 1 bis 5, **dadurch gekennzeichnet, daß** sie eine Scheibe (10) aus Kunststoff als Zwischenlage zwischen der Profilschiene (2) und der Glasscheibe (11) umfaßt.

7. Vorrichtung zur Klemmbefestigung nach einem der Ansprüche 1 bis 6, **dadurch gekennzeichnet, daß** sie einen konischen Zwischenring (14) aus einem im Vergleich zum Glas weichen Material, insbesondere aus einem geeigneten Polymer, als Zwischenkörper zwischen der konischen Vertiefung (13) der Bohrung (12) in der Glasscheibe (11) und dem Kopf der Schraube (15) umfaßt, wobei die äußere und die innere Mantelfläche des konischen Zwischenrings (14) einen unterschiedlichen Kegelwinkel aufweisen.

## Claims

1. A device for the clamp fastening of facing panels, in particular glass panels, to building facades by means of screws (15) passing through drill holes (12) in the glass panels (11) to a supporting structure comprising horizontal profiled rails (2) with an undercut channel (6), clamping means (9) being provided for clamp fastening which may be introduced from outside into the channel opening (7) and fixed by twisting against the backs of the abutments (8) of the undercut channel (6) of the profiled rails (2) and are provided with an internal screw thread, **characterised by** the following features:
a) the clamping means (9) comprise an intermediate member (16) and a gripping member (17) provided with the internal screw thread,
b) the intermediate member (16) is provided with an elongate hole (19) extending vertically or approximately vertically in the installed state, and on its rear with a guide (20) formed of lateral stop faces for the gripping member (17),
c) the gripping member (17) provided with the internal screw thread is provided on the side adjoining the web (21) of the intermediate member (16) with projecting lugs (22), and
d) the intermediate member (16) consists of a material which is softer than the material of the gripping member (17), such that the lugs (22) of the gripping member (17) penetrate into the intermediate member (16) and produce an interlocking fit between the gripping member (17) and the intermediate member (16).

2. A device for clamp fastening according to claim 1, **characterised in that** the intermediate member (16) consists of a relatively soft metal such as aluminium or of non-metallic material, in particular of a glass fibre-reinforced plastics material.

3. A device for clamp fastening according to claim 2, **characterised in that** the intermediate member (16) consists of a polyamide-based polymer.

4. A device for clamp fastening according to one of claims 1 to 3, **characterised in that** the intermediate member (16) takes the form, in longitudinal section, of a parallelogram, wherein the longer diagonal of the parallelogram is longer than the width of the channel (6) in the profiled rail (2).

5. A device for clamp fastening according to one of claims 1 to 4, **characterised in that** the intermediate member (16) is provided on its front with projections (18) engaging in the channel opening (7) in the installed state.

6. A device for clamp fastening according to one of claims 1 to 5, **characterised in that** it comprises a disk (10) of plastics material as a spacer between the profiled rail (2) and the glass panel (11).

7. A device for clamp fastening according to one of claims 1 to 6, **characterised in that** it comprises a conical intermediate ring (14) of a material softer than the glass, in particular of a suitable polymer, as a shim between the conical recess (13) of the drill hole (12) in the glass panel (11) and the head of the screw (15), wherein the outer and inner circumferential surfaces of the conical intermediate ring (14) exhibit different cone angles.

## Revendications

1. Dispositif pour fixer par serrage des panneaux d'habillage, en particulier des panneaux de verre de façades de bâtiments, à l'aide de vis (15) qui traversent des perçages (12) ménagés dans les panneaux de verre (11), à une structure porteuse présentant des profilés horizontaux (2) possédant une rainure à contre-dépouille (6), dans lequel, pour la fixation par serrage, il est prévu des moyens de serrage (9) munis d'un filetage d'écrou, qui peuvent être enfilés de l'extérieur dans la fente de rainure (6) et immobilisés par rotation contre les faces arrière de l'appui (8) de la rainure à contre-dépouille (6) des profilés (2), **caractérisé par** les caractéristiques suivantes :
(a) les moyens de serrage (9) comprennent une pièce intermédiaire (16) et une pièce de tension (17) qui est munie du filetage d'écrou ;
(b) la pièce intermédiaire (16) est munie d'un trou allongé (19) qui s'étend verticalement ou à peu près verticalement dans l'état de montage et, sur sa face arrière, elle est munie d'un guide (20) muni de surfaces de butée latérales, destiné à guider la pièce de tension (17) ;
(c) la pièce de tension (17) munie du filetage d'écrou est munie de dents saillantes (22) sur la face qui est appuyée contre le voile (21) de la pièce intermédiaire (16) ; et
(d) la pièce intermédiaire (16) est faite d'une matière plus tendre, comparée à la matière de la pièce de tension (17), de telle sorte que les dents (22) de la pièce de tension (17) s'enfoncent dans la pièce intermédiaire (16) et établissent une liaison par sûreté de forme entre la pièce de tension (17) et la pièce intermédiaire (16).

2. Dispositif pour la fixation par serrage selon la revendication 1, **caractérisé par le fait que** la pièce intermédiaire (16) est composée d'un métal relativement mou comme l'aluminium ou d'une matière non métallique, en particulier d'une matière plastique renforcée de fibre de verre.

3. Dispositif pour la fixation par serrage selon la revendication 2, **caractérisé par le fait que** la pièce intermédiaire (16) est composée d'un polymère à base de polyamide.

4. Dispositif pour la fixation par serrage selon l'une des revendications 1 à 3, **caractérisé par le fait que** la pièce intermédiaire (16) présente, en coupe longitudinale, une configuration en forme de parallélogramme, la grande diagonale du parallélogramme étant plus longue que la largeur de la rainure (6) du profilé (2).

5. Dispositif pour la fixation par serrage selon l'une des revendications 1 à 4, **caractérisé par le fait que** la pièce intermédiaire (16) est munie sur sa face avant, de saillies (18) qui s'engagent dans la fente (7) de la rainure à l'état monté.

6. Dispositif pour la fixation par serrage selon une des revendications 1 à 5, **caractérisé par le fait qu**'il comprend une rondelle (10) en matière plastique utilisée comme intercalaire entre le profilé (2) et le panneau de verre (11).

7. Dispositif pour la fixation par serrage selon l'une des revendications 1 à 6, **caractérisé par le fait qu**'il comprend une bague intermédiaire conique (14) faite d'une matière tendre, comparée au verre, en particulier d'un polymère approprié, en tant que corps intermédiaire entre l'approfondissement conique (13) du perçage (12) formé dans le panneau de verre (11) et la tête de la vis (15), la surface latérale externe et la surface latérale interne de la bague intermédiaire conique (14) présentant des angles de cône différents.
